# EUROPEAN PATENT SPECIFICATION

(11) **EP 0 326 751 B1**
(45) Date of publication and mention of the grant of the patent: **31.08.1994**
(21) Application number: 88311337.5
(22) Date of filing: 30.11.1988
(51) Int. Cl.: G06K 11/06, G06F 3/033

(54) **Touchscreen control panel with sliding touch control**
Steuerberührungsanzeige mit Steuerung durch Schiebeberührung
Ecran de commande tactile avec bouton de commande tactile du type curseur

(30) Priority: 01.02.1988 US 151041
(43) Date of publication of application: 09.08.1989
(73) Proprietor: SPERRY MARINE INC., Charlottesville Virginia 22906 (US)
(72) Inventor: Cornett, Johnny A., Crozer VA 22932 (US); Corbett, James D., Charlottesville VA 22901 (US)
(74) Representative: Michaels, Peter Albert

(56) References cited:
- EP-A- 0 030 160
- US-A- 4 224 615
- ADVANCES IN INSTRUMENTATION, vol. 35, part 2, 1980, pages 111-119, ResearchTriangle Park, North Carolina, US; STEVEN K. GREGORY: "Interactive Televisionfor Control Systems"
- IBM TECHNICAL DISCLOSURE BULLETIN, vol. 26, no. 5, October 1983, pages 2620-
- 2621, New York, US; A.G. COLE et al.: "Touch-sensitive Overlay SelectionRepeater

## Description

The invention relates to graphically generated control panels utilizing a touchscreen overlay on the display monitor.

Touchscreen control panels are known in the art that utilize a touchscreen overlay on the raster cathode ray tube (CRT) monitor. The system software displays graphic symbology on the monitor representing the front panel controls for the system. The operator interfaces with the system by touching the screen in the area of a control. Actuation of the control is performed by the system software detecting the touch and entering an appropriate control routine corresponding thereto. Prior art touch panels require a large touch area for each control to prevent operator error such as inadvertant actuation of an undesired control function. In the prior art, the system software either displays the control over a larger than desired area or utilizes a larger than desired touch sensitive area associated with the control. These requirements severely limit the density of displayed controls on the graphically generated control panel.

It is desirable to utilize the touchscreen control technology in implementing the control panel of, for example, a radar system with collision avoidance functionality utilizing a raster scanned display on a CRT monitor. The software generated touch panel control provides the operator interface for controlling the radar and collision avoidance display. It is a desideratum to minimize the number of front panel mechanical controls thereby providing an unclutter easily utilized radar and collision avoidance system. Ideally, it is desirable to eliminate all mechanical controls and to provide the operator control interface by the touch panel technology. By placing all of the radar and collision avoidance controls on the raster display, the relatively high density of controls required exacerbated the problem of operator control error.

In addition to the above described limitations of prior art touchscreen control panels, adjustment controls such as potentiometers with, for example, thumbwheel actuation were not conveniently incorporated in such software generated control panels.

The above described disadvantages of the prior art are obviated by an apparatus as defined in claim 1, whereby the operator slides the control touch over the touchscreen with no control actuation and with visual feedback highlighting the control currently touched. The operator releases touch from the highlighted control to effect actuation of the associated control function.

If the control function is a parameter adjustment, the entire control screen is utilized for sliding touch adjustment of the parameter. Utilization of a short time delay after touch release,before exiting the parameter adjustment mode, provides a thumbwheel affect for the parameter adjustment.

In connection with the present invention, attention is also drawn to patent EP-A-0 030 160, and to the article "Interactive Television for Control Systems" by S K Gregory in ADVANCES IN INSTRUMENTATION vol 35 part 2, 1980 page 112.

EP-A-0 030 160 and the article "Interactive Television for Control Systems" both disclose instances where the state of a controlled function is finalised by touch removal: EP-A-0 030 160 shows the moving of a control button on a screen; the position of the button at which the finger is taken away will be the new one if confirmed by the touch of a "return" button. "Interactive Television for Control Systems" describes virtual instruments as images of real instruments on a screen; one implementation is a sliding bar potentiometer, where a new value becomes final when the operator removes his finger. In the IBM TDB vol.26 No.5, October 1983, page 2620/2621, "Touch-sensitive Overlay Selection Repeater", removal of the finger actuates the control of deletion of a duplicated display of the word being selected.

Figure 1 is a schematic block diagram of a computer controlled system utilizing the touchscreen control panel of the present invention.

Figure 2 is a flow chart illustrating the control flow of the interrupt routine utilized in embodying the present invention.

Figure 3 is a flow chart illustrating the control flow embodying the sliding touch/actuate on release control functions.

Figure 4 is a flow chart illustrating the control flow embodying the actuate on touch control functions.

Figure 5 is a flow chart illustrating the control flow embodying the parameter adjustment control functions.

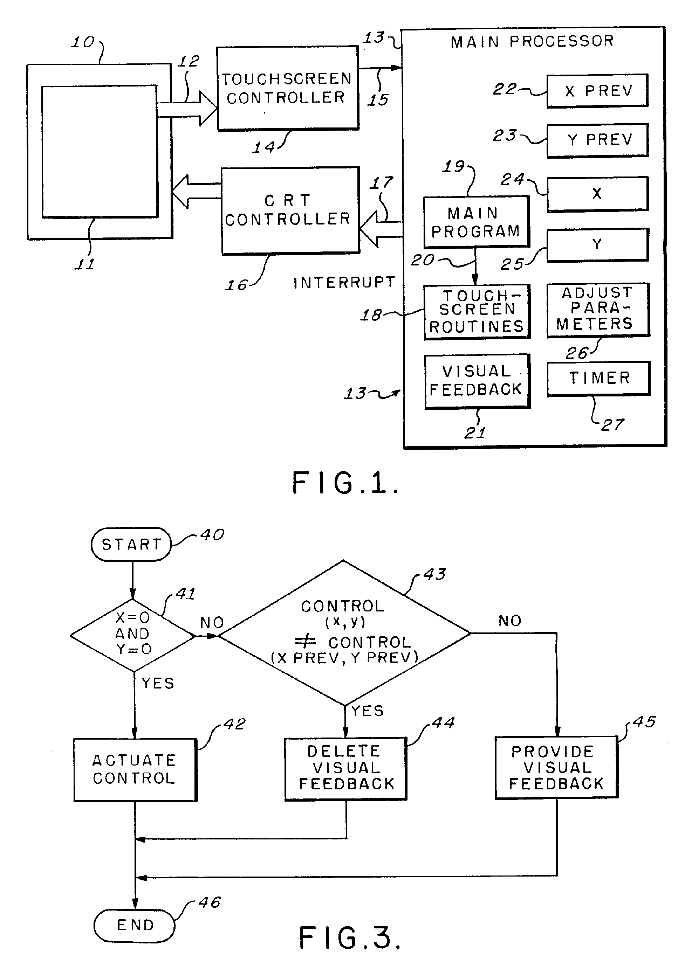

Referring to Figure 1, a schematic block diagram of a preferred embodiment of the invention is illustrated. The system of the present invention includes a cathode ray tube (CRT) display monitor 10̸ with a touch screen overlay 11. Preferably, the touch screen 11 is of a capacitive type that requires touch contact for touch position input data to be generated. The capacitive type touch screen does not require touch pressure for the data generation. The touch screen 11 continuously provides touch position input data in a conventional X,Y cartesian coordinate format over a bus 12. These properties of the touch screen 11 permit the operator to slide touch over the screen of the monitor 10̸, maintaining contact without pressure, thereby providing a continuous stream of touch positions on the bus 12. A main processor 13 receives the continuous stream of touch positions via a touch screen controller 14 over a serial bus 15. It is appreciated that when no touch is effected, the X and Y touch positions provided by the touch screen 11 over the bus 12 are both zero. No transmission of touch position occurs when no touch is effected. The main processor 13 sets touch positions to zero at sample time (16 Hz interrupt) if no transmission of touch data has occurred.

The operator touches are sensed by the touch screen 11 and decoded by the touch screen controller 14. The touch screen controller 14 receives the cartesian coordinate data from the touch screen 11 and converts the data to a format, such as serial RS232, suitable for transmission to the main processor 13. Thus the touch screen controller 14 presents the X,Y position data from the touch screen 11 to the main processor 13.

The main processor 13 decodes the touch position and responds by issuing commands to the monitor 10̸ via a CRT controller 16 and a bus 17, such as a VME bus. Thus the main processor 13 initializes and controls the display provided by the monitor 10̸ via commands to the CRT controller 16.

The main processor 13 includes touch screen routines 18 for providing the iterative processing required in the generation of the touch screen control panels of the system in which the invention is utilized. The main processor 13 includes a main program 19 containing the software for performing the control procedure functions actuated by operation of the touch screen control panal of the present invention. The main program 19 provides an interrupt on a path 20̸ to the touch screen routines 18 to control the iterative execution thereof. The interrupt signal is provided every 1/16 seconds. The touch screen routines 18 utilize visual feedback 21 for highlighting controls on the control panal displayed on the monitor 10̸ by the main processor 13 for reasons to be described. Control highlighting may be effected by the visual feedback 21 by color contrast, intensity contrast, or any other suitable highlighting technique.

The main processor 13 also includes a plurality of storage locations utilized by the touch screen routines 18 in effecting the control routines of the present invention. A store X PREV 22 stores the X touch coordinate of the previous iteration. A store Y PREV 23 stores the Y touch coordinate of the previous iteration. A store X 24 and a store Y 25 store the X and Y touch coordinates, respectively, of the current iteration. As previously described, it is appreciated that when no touch is effected the current X and Y touch positions are both zero. A store ADJUST PARAMETERS 26 stores an adjust parameters flag utilized in the parameter adjustment routine. A time out timer 27 provides a time out signal utilized in the parameter adjustment routine.

Three types of controls may be incorporated in a system utilizing the touch screen control panal of the present invention. These controls are function actuation on release, function actuation on touch, and parameter adjustment.

Function actuation on release controls include toggle switches, mode selection controls, and page control selection. In a manner to be described, these controls are actuated by the operator touching the desired control, with visual feedback highlighting indicating that the desired control is enabled, and then releasing touch to actuate the function. The toggle switch keys return to their original state if touch slides out of the control area on the touchscreen but change if touch is released. In a raster scan radar display system such toggle switches may actuate a true motion display, a timer, a collision alarm and the like. Mode selection switches that are actuated on release may, for example, include display controls for North Up, Course Up, Heading Up and the like. The present invention may be utilized in a system where the control panals are organized into menu driven pages. The main processor 13 may display, on the monitor 10̸, a menu page of keys which, when actuated by the touchscreen 11, display pages of control panals associated with the menu keys. In this manner large numbers of associated controls may be displayed on the monitor 10̸ for selective actuation by the operator via the touchscreen 11.

Function actuation on touch controls include momentary switches and parameter adjustment control enabling. The momentary switches actuate the control upon initial touch of the displayed key and the release of touch deactuates the key. These controls are actuated when the operator touches the touchscreen 11 within the area of the control displayed on the CRT monitor 10̸. Generally, the actuation on touch controls are displayed over a larger touch area than the sliding touch/actuation on release controls. An example of a momentary switch control is the Heading Mark Function.

Parameter adjustment controls include potentiometers, multi-selection switches, data entry controls and cursor positioning controls. A parameter adjustment control is enabled by the operator by a first touch on the control key. Successive touches cause the parameter to change value by detecting the change in touch position. Adjustment is facilitated by dedicating the entire touch panal 11 to the enabled control. In a manner to be explained, the parameter adjustment controls are automatically disabled when no touches are detected for a period of time.

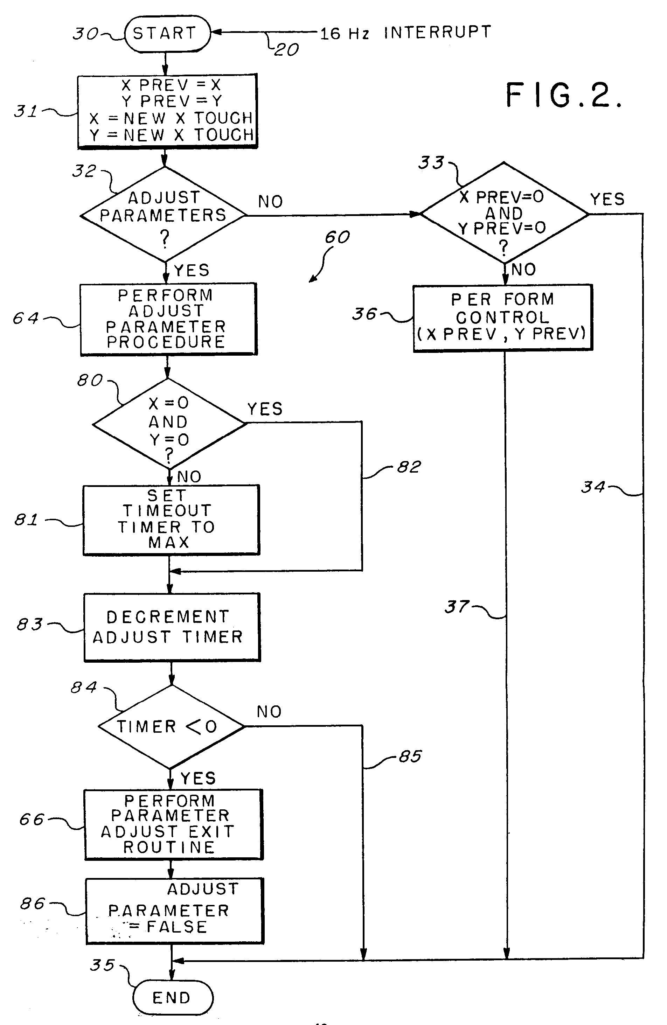

The main processor 13 via the CRT controller 16 provides commands to generate the desired characters and control key symbology on the monitor 10̸. The main processor 13 commands character selection, symbology selection, color selection, and the like. The main processor 13 causes a key or control to be highlighted by commanding selected background and foreground colors. The details of the touchscreen routines 18 are illustrated in the flow charts of Figures 2-5.

Referring to Figure 2, the control flow for the touch response interrupt routine is illustrated. The routine of Figure 2 is interrupt driven on a real time basis every 1/16 seconds and thus the routine is entered at a start block 30̸ via the 16 Hz. interrupt signal 20̸. Control flows to a block 31 representing the storage of the X and Y touch positions from the previous iteration in X PREV and Y PREV, respectively, and the new X and Y touch positions in X and Y, respectively. Thus with respect to Figure 1 the contents of the store 24 are transferred to the store 22 and the contents of the store 25 are transferred to the store 23 and the current X and Y touch coordinates provided via the touch screen controller 14 and the bus 15 are loaded into the stores 24 and 25, respectively. When the operator touches the touch screen 11, the X and Y touch positions sampled by the interrupt routine of Figure 2 become non-zero. When no touch is effected the new X and Y touch positions are both zero.

Control flow enters a decision block 32 that tests the parameter adjustment flag 26 (Fig. 1) to determine if it is set to true or false. If the parameter adjustment flag is false, control flows to a decision block 33 that tests if there was a touch during the previous iteration. A touch response during the previous iteration is manifested by either X PREV or Y PREV being non-zero. If there was no touch during the previous iteration, X PREV and Y PREV will be zero and control flows via a path 34 to an End Block 35. It is appreciated that means (not shown) are included whereby control executes path 34 to the End Block 35 when there is no touch for at least two iterations. If, however, the touch screen 11 was touched during the previous iteration control flows to a block 36.

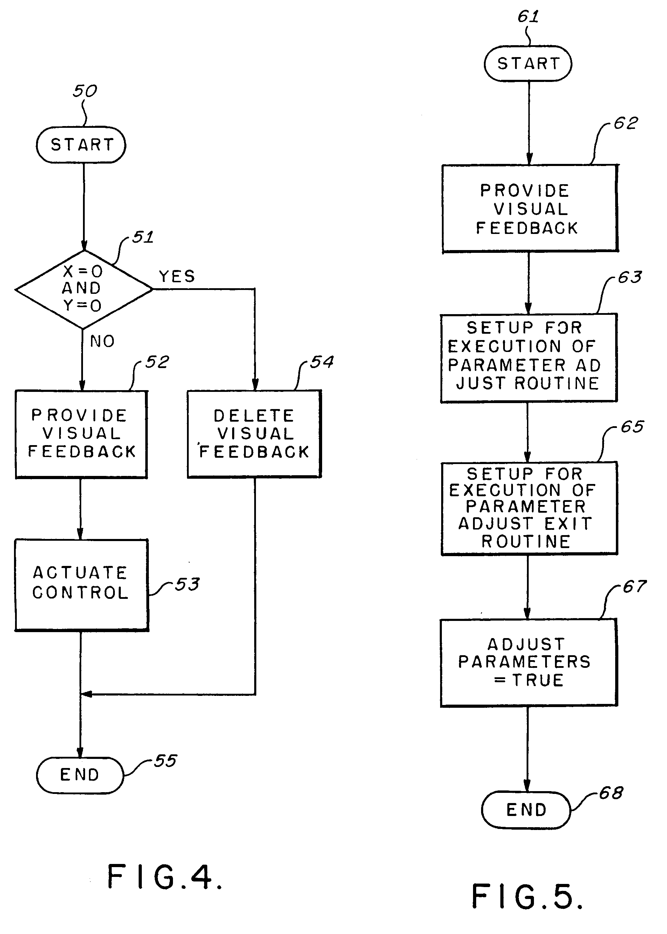

The block 36 decodes the values X PREV and Y PREV to detect if a control area was touched during the previous iteration. The main program 19 determines if X PREV and Y PREV define a point within the rectangular boundary of a control. If (X PREV, Y PREV) is not within the boundary of any control no processing is performed. If, however, the touch position (X PREV, Y PREV) is within the boundary of a control key, the processing associated with the touched control is performed. Accordingly a control routine defined by X PREV, Y PREV, as detailed in Figures 3-5 is executed when a control is touched.

The system includes three types of control routines: Actuate on Release, Actuate on Touch, and Parameter Adjustment. Figure 3 illustrates the control flow for the Sliding Touch/Actuate on Release controls. Figure 4 illustrates the control flow for the Actuate on Touch controls. Figure 5 illustrates the control flow for the Parameter Adjustment controls. Thus the diagrams of Figures 3-5 are generic process control flow diagrams initiated and performed when control flow enters the block 36. It is appreciated that the routines performed pursuant to the block 36 are entered via a 1/16 second old touch sample and are exited via a path 37 to the End block 35.

If the control being touched is an Actuate on Release control, the routine of Figure 3 is utilized. Referring to Figure 3 control enters at a Start block 40̸ and flows to a decision block 41 for testing the current X,Y touch position. If X and Y are both zero, the operator has released touch and control flows to an Actuate Control block 42. Pursuant to the block 42, the control procedure is actuated corresponding to the control that was touched, highlighted, and released. If, however, in the decision block 41, either X or Y is non-zero control flows to a decision block 43 to determine if the operator is maintaining touch on the same control or has slid touch out of the control boundaries.

Contol (X,Y) defines the control within the boundaries of which the touch point (X,Y) resides. The decision block 43 determines whether or not the current touch position (X,Y) resides within the boundaries of the same control as the previous touch position (X PREV, Y PREV). If X and Y indicate that the operator has moved touch to another control, the visual feedback for the control out of which operator touch has slid is deleted from the display pursuant to a block 44. If however X and Y indicate that the operator touch is on the same control, visual feedback is maintained on the touched control pursuant to a block 45. It is appreciated that visual feedback highlighting is dependent on the control selected and is schematically represented by the visual feedback block 21 discussed above with respect to Figure 1.

Thus the decision block 43 determines if Control (X,Y) is not the same as Control (X PREV, Y PREV). If the touch position (X,Y) is not in a control area, control returns to the Start block 40̸ until touch slides into the area of a new control. Control flows from the blocks 42, 44, and 45 to an End block 46 whereat the routine of Figure 3 is exited.

If the control being touched pursuant to the block 36 of Figure 2 is an Actuate on Touch control, the routine of Figure 4 is performed. Referring to Figure 4, control enters at a Start block 50̸ and flows to a decision block 51 whereat the current touch position (X,Y) is tested. If the current touch position is non-zero, touch resides on the Actuate on Touch control that caused entry into the Figure 4 routine. Accordingly, visual feedback is provided for the control pursuant to a block 52 and the control is actuated pursuant to a block 53. If however, the current touch position is no longer on this control, the visual feedback is deleted with respect thereto as indicated by a block 54. Control flows from the blocks 53 and 54 to an End block 55 whereat the routine of Figure 4 is exited.

If Control (X PREV, Y PREV) processed in the block 36 of Figure 2 is a Parameter Adjustment control, the Parameter Adjustment Controls routine of Figure 5 is executed. The routine of Figure 5 sets up a generic parameter adjustment routine 60̸ of Figure 2 and sets the Adjust Parameters flag to true so that the parameter adjustment execution will be effected by the 16 Hz interrupt routine. During the parameter adjustment mode, control will repetitively flow through the general parameter adjustment routine 60̸ of Figure 2 until the parameter adjustment timer times out. Thus it is appreciated that because the Adjust Parameter flag is set to true until parameter adjustment timeout, the Parameter Adjustment routine of Figure 5 will be executed only upon the initial touch of a parameter adjustment control.

Referring to Figure 5 control flow enters the routine at a Start block 61 and then flows to a block 62 for highlighting the touched parameter adjustment control by providing visual feedback. As discussed above, visual feedback is provided by the visual feedback routine 21 in the main processor 13 of Figure 1.

Control proceeds to a block 63 to set up the generic parameter adjustment routine 60̸ of Figure 2 for execution by the 16 Hz interrupt routine. Specifically the block 63 sets up a Perform Adjust Parameter Procedure block 64 of Figure 2 as well as the parameter adjustment timer 27 of Figure 1. The block 63 passes the value to be adjusted and a routine to compute the upper and lower bounds of the value to the block 64 for processing during the subsequent 16 Hz. iterations. The block 63 also passes a timeout time associated with the value to be adjusted to the timer 27 of Figure 1. In a manner to be described, the generic parameter adjustment routine 60̸ of Figure 2, execution every 1/16 seconds when enabled by the Adjust Parameters flag 26 of Figure 1, senses X position touch changes and adjusts the value of the parameter accordingly.

With continued reference to Figure 5, after setting up for execution of the parameter adjustment routine at the block 63, control flows to a block 65 that sets up a Parameter Adjust Exit Routine block 66 of Figure 2 for execution during the 16 Hz interrupt routine. The Set Up for Execution of Parameter Adjust Exit block 65 passed a routine in accordance with the parameter to be adjusted to the block 66 of Figure 2 to be executed at parameter adjustment timeout. This exit routine deletes the visual feedback highlighting from the actuated control key for the adjusted parameter. Control then flows to a block 67 for setting the Adjust Parameters flag to true. Control exits from the Parameter Adjustment Controls routine of Figure 5 at an End block 68.

With the Adjust Parameters flag set to true, the system enters the parameter adjustment mode where visual feedback of the parameter adjustment control indicates that this mode is active and all subsequent X touch position changes refer to the parameter being adjusted until the mode is exited. The Adjust Parameter Procedure changes the value of the parameter being modified by sensing changes in operator X touch position. When a parameter adjust control is enabled, touches over the entire touch screen 11 (Fig. 1) are utilized for the modification and no other controls may be activated during this mode. The operator may adjust the parameter from any position on the screen since the adjustment procedure only utilizes changes in X touch positions. X touch data is utilized to modify the parameter, where positive changes in X increase the value of the parameter and negative changes in X decrease the value of parameter.

Referring again to Figure 2, upon receiving the 16 Hz interrupt, the touch position sampling procedure described above with respect to the block 31 is performed. The Adjust Parameters flag (in store 26 of the main processor 13 of Fig. 1) is tested at the decision block 32. Since the Adjust Parameters flag was set to true at the block 67 (Figure 5), control flows to the block 64 for performing the Adjust Parameter Procedure. A preferred parameter adjustment procedure may be implemented as follows:
Delta = Delta + (X-X PREV) - Applied Delta *K
If (X = 0̸ or X PREV = 0̸)
Delta = 0̸
Applied Delta = Delta/K
Parameter = Parameter + Applied Delta
The factor K determines the parameter adjustment touch sensitivity by relating the change in parameter value to the magnitude of the touch position change.

After performing the procedure pursuant to the block 64, control flows to a decision block 80̸ to test if a touch is being maintained. If the operator is touching the screen, the parameter adjust timer 27 (Figure 1) is set to maximum at a block 81. If touch has been released, the block 81 is bypassed by a path 82. Control flows thereafter to a block 83 whereat the timer 27 is decremented. From the block 82 control flows to a decision block 84 to determine if the timer 27 has timed out. If the timer 27 has not timed out, control flows via a path 85 to the End block 35.

Thus when a parameter is being adjusted, no touch results in no change to the value of the parameter and permits the parameter adjustment timeout timer to decrement by not resetting the timer to maximum. When the timer 27 times out, control flows to the block 66 whereat the Parameter Adjust Exit Routine is performed. The exit routine deletes the parameter adjust control visual feedback and sets the Adjust Parameters flag to false at a block 86. After setting the flag to false, control flows to the End block 35.

Thus it is appreciated that the parameter adjustment mode is exited with touch reverting to normal operation upon release of touch after the time delay effected by the timer 27 has timed out. The logic implemented by the blocks 80̸-84 and the timer 27 provides a thumb wheel affect to the parameter adjustment procedure. The parameter adjustment mode may be entered either by the Actuate on Touch or the Sliding Touch/Actuate on Release procedures described above. While the parameter adjustment mode is enabled, the actuated control process is performed at the real time rate of 16 Hz via the 16 Hz interrupt routine of Figure 2. The parameter adjustment procedure facilitates entering data into the system by the operator.

The touch panal apparatus of the present invention provides advantages over previous touch panal controls since the operator selects a control in a crowded control area by sliding touch to the control until receiving visual feedback assurance of proper control selection. The operator then actuates the control function by releasing touch. The two principle advantages of the sliding touch process of the present invention are: 1) a considerable reduction in accidental acutation of a control, and 2)a significant enhancement in control density since the controls may be displayed over significantly smaller areas because of the sliding touch, visual feedback, and actuation upon release process.

It is appreciated from the foregoing that the invention renders touchscreen front panals more desirable for use as a device control than prior art arrangements. The present invention provides greater versatility than prior art configurations because the software controls the appearance of the front panal layout. The invention is less expensive since the number of mechanical switches required is reduced to a minimum.

While the invention has been described in its preferred embodiment, it is to be understood that the words which have been used are words of description rather than limitation and that changes may be made within the purview of the appended claims.

## Claims

1. Touchscreen control panel apparatus comprising
display means (10),
touchscreen means (11, 14) including a touchscreen overlay (11) on said display means, said touchscreen means providing touch coordinate signals in accordance with operator touch on said touchscreen overlay and a touchscreen release signal in the absence of an operator touch,
key generation means (13, 16) for displaying a plurality of control keys on said display means,
highlighting means (13, 18, 21) for highlighting a control key being touched, highlight deletion means (13, 44) for deleting said highlighting with respect to a control key from which operator touch has slid, and
control actuation means (13, 19) for actuating a control function associated with a highlighted control key in response to said touch release signal.

2. The apparatus of claim 1 wherein said touchscreen overlay (11) comprises a capacitive touchscreen.

3. The apparatus of claim 1 further including
sliding touch detecting means (13, 43) for detecting when operator touch has slid from a first control key to a second control key.

4. The apparatus of claim 3 including further control actuation means (13, 53) for actuating a control function associated with a highlighted control key in response to operator touch thereon.

5. The apparatus of claim 4 further including iterative means comprising
means for storing (24, 25) said touch coordinate signals for a current iteration,
means for storing (22, 23) said touch coordinate signals from an iteration prior to said current iteration, and
routine determining means for determining, in the absence of said touch release signal, if a touched control key controls an actuate on release function or an actuate on touch function.

6. The apparatus of claim 5 further including parameter adjustment means and wherein said routine determining means includes means for determining if a touched control key controls an adjustable parameter.

7. The apparatus of claim 6 wherein said parameter adjustment means comprises
parameter value adjustment means for adjusting the value of a parameter in accordance with changes in said touch coordinate signals, and
parameter adjustment actuating means for actuating said parameter value adjustment means when said routine determining means detects a touched key associated with said parameter.

8. The apparatus of claim 7 wherein said parameter adjustment means includes
an adjust parameters flag set in response to said routine determining means detecting a touched key associated with said adjustable parameter,
said parameter value adjustment means being actuated when said adjust parameters flag is set.

9. The apparatus of claim 7 wherein said parameter adjustment means includes timer means decremented in response to said touch release signal for controlling deactuation of said parameter value adjustment means when said timer times out.

10. The apparatus of claim 7 wherein said touch coordinate signals comprise first and second coordinate signals and said parameter value adjustment means comprises means for adjusting the value of said parameter in accordance with changes in said first coordinate signal only.

## Patentansprüche

1. Kontrolltafeleinrichtung mit berührungsempfindlichem Bildschirm mit
einer Anzeigevorrichtung (10), einer berührungsempfindlichen Bildschirmvorrichtung (11,14) mit einer Auflage (11), die einen berührungsempfindlichen Bildschirm auf der Anzeigevorrichtung bildet, wobei die berührungsempfindliche Bildschirmeinrichtung Koordinatensignale bezüglich einer Berührung in Übereinstimmung mit der Berührung einer Bedienungskraft auf der berührungsempfindlichen Bildschirmauflage und ein berührungsempfindlicher Bildschirm losgelassen"-Signal in Abwesenheit einer Berührung durch die Bedienungskraft erzeugt,
Tastenerzeugungsvorrichtungen (13,16) zur Anzeige einer Vielzahl von Steuertasten auf der Anzeigevorrichtung,
Hervorhebungseinrichtungen (13,18,21) zur Hervorhebung einer Steuertaste, die berührt wird,
Vorrichtungen (13,44) zur Löschung der Hervorhebung um die Hervorhebung in Bezug auf eine Steuertaste zu löschen, von der die Berührung der Bedienungskraft abgeglitten ist, und
Steuerungsbetätigungsvorrichtungen (13,19) zum Betätigen einer Steuerfunktion, die zu der hervorgehobenen Steuertaste gehört, aufgrund des "Berührung losgelassen"-Signals.

2. Vorrichtung nach Anspruch 1, wobei die Auflage (11) des berührungsempfindlichen Bildschirms einen kapazitiven berührungsempfindlichen Bildschirm umfaßt.

3. Vorrichtung nach Anspruch 1, die weiter eine Erkennungsvorrichtung (13,43) für gleitende Berührung umfaßt, die dazu dient, zu erkennen, wenn die Berührung durch die Bedienungskraft von einer ersten Steuertaste zu einer zweiten Steuertaste geglitten ist.

4. Vorrichtung nach Anspruch 3, die weitere Steuerbetätigungsvorrichtungen (13,53) zur Betätigung einer Steuerfunktion, die mit einer hervorgehobenen Steuertaste verbunden ist, aufgrund der Berührung der Bedienungskraft auf dieser Steuertaste umfaßt.

5. Vorrichtung nach Anspruch 4, die weiter eine Wiederholungsvorrichtung mit einer Vorrichtung zur Speicherung (24,25) der Berührungskoordinatensignale für einen laufenden Iterationsschritt, Vorrichtungen zur Speicherung (22,23) der Berührungskoordinatensignale von einem Iterationsschritt vor dem laufendem Iterationsschritt, und Routinenerkennungsvorrichtungen zur Erkennung in Abwesenheit des "Berührung losgelassen"-Signals, ob eine berührte Steuertaste eine "Ausführung wenn losgelassen"-Funktion oder eine "Ausfühung bei Berührung"-Funktion steuert, umfaßt.

6. Vorrichtung nach Anspruch 5, die weiter Parametereinstellvorrichtungen umfaßt, wobei die Routinenerkennungsvorrichtung eine Vorrichtung zur Erkennung ob eine berührte Steuertaste einen einstellbaren Parameter steuert, umfaßt.

7. Vorrichtung nach Anspruch 6, wobei die Parametereinstellvorrichtung eine Parameterwerteinstellvorrichtung zur Einstellung des Wertes eines Parameters in Übereinstimmung mit Änderungen in den Berührungskoordinatensignalen und Parametereinstellungsbetätigungsvorrichtungen zur Auslösung der Parameterwerteinstellvorrichtung, sobald die Routinenerkennungsvorrichtung erkennt, daß eine Taste, die mit dem Parameter in Verbindung steht, berührt ist, umfaßt.

8. Vorrichtung nach Anspruch 7, wobei die Parametereinstellvorrichtung ein Parametereinstellensignal umfaßt, welches aufgrund der Routinenerkennungsvorrichtung, die eine berührte Taste erkennt, die mit dem einstellbaren Parameter in Verbindung steht, gesetzt wird, wobei die Parameterwerteinstellvorrichtung betätigt wird, wenn das Parametereinstellensignal gesetzt ist.

9. Vorrichtung nach Anspruch 7, wobei die Parametereinstellvorrichtung eine Zeitgebervorrichtung umfaßt, die aufgrund des "Berührung losgelassen"-Signals heruntergezählt wird, um die Abschaltung der Parameterwerteinstellvorrichtung zu steuern, wenn die Zeitgebervorrichtung abgelaufen ist.

10. Vorrichtung nach Anspruch 7, wobei die Berührungskoordinatensignale 1. und 2. Koordinatensignale umfassen und die Parameterwerteinstellvorrichtung Vorrichtungen zur Einstellung des Wertes des Parameters in Übereinstimmung mit Änderungen nur des 1. Koordinatensignals umfaßt.

## Revendications

1. Dispositif de panneau de commande à écran tactile comportant:
- des moyens d'affichage (10)
- des moyens formant écran tactile (11,14) comprenant un revêtement (11) formant écran tactile sur lesdits moyens d'affichage, lesdits moyens formant écran tactile fournissant des signaux de coordonnées de contact en fonction du contact de l'opérateur sur ledit revêtement formant écran tactile et un signal de déclenchement d'écran en l'absence d'un contact par l'opérateur,
- des moyens de génération de touches (13,16) pour afficher une pluralité de touches de commande sur lesdits moyens d'affichage,
- des moyens d'accentuation (13,18,21) pour accentuer une touche de commande soumise à un contact, des moyens de suppression de l'accentuation (13,44) pour supprimer ladite accentuation pour une bouche de commande à partir de laquelle le contact de l'opérateur a glissé, et
- des moyens d'activation de commande (13,19) pour activer une fonction de commande asociée à une touche de commande accentuée en réponse audit signal de déclenchement de touche.

2. Dispositif selon la revendication 1, dans lequel ledit revêtement (11) formant écran tactile comprend un écran tactile capacitif.

3. Dispositif selon la revendication 1, comprenant en outre:
- des moyens de détection de glissement de contact (13,43) pour détecter le moment où le contact de l'opérateur a glissé d'une première touche de commande à une deuxième touche de commande.

4. Dispositif selon la revendication 3, comprenant d'autre moyens d'activation de commmande (13,53) pour activer une fonction de commande associée à une touche de commande accentuée en réponse au contact de l'opérateur sur cette touche.

5. Dispositif selon la revendication 4, comprenant, en outre, des moyens itératifs comprenant:
- des moyens (24,25) pour mémoriser lesdits signaux de coordonnées de contact en vue d'une itération courante,
- des moyens (22,23) pour mémoriser lesdits signaux de coordonnées de contact provenant d'une itération précedant ladite itération courante, et
- des moyens de détermination de routine pour déterminer, en l'absence dudit signal de déclenchement d'écran, si une touche de commande contactée commande une activation sur une fonction de déclenchement ou une activation sur une fonction de contact.

6. Dispositif selon la revendication 5, comprenant en outre des moyens de réglage de paramètre et dans lequel lesdits moyens de détermination de routine comprennent des moyens pour déterminer si une touche de commande contactée commande un paramètre réglable.

7. Dispositif selon la revendication 6, dans lequel lesdits moyens de réglage de paramètre comprennent:
- des moyens de réglage de valeur de paramètre pour régler la valeur d'un paramètre en fonction de modifications desdits signaux de coordonnées de contact, et
- des moyens d'activation de réglage de paramètre pour activer lesdits moyens de réglage de valeur de paramètre quand lesdits moyens de détermination de routine détectent une touche contactée associée audit paramètre.

8. Dispositif selon la revendication 7, dans lequel lesdits moyens de réglage de paramètre comprennent:
- un drapeau "Régler paramètres" mis en réponse auxdits moyens de détermination de routine détectant une touche contactée associée audit paramètre réglable,
- lesdits moyens de réglage de valeur de paramètre étant activés quand ledit drapeau "Régler paramètres" est mis.

9. Dispositif selon la revendication 7, dans lequel lesdits moyens de réglage de paramètres comprennent des moyens de temporisation décrémentés en réponse audit signal de déclenchement de contact pour commander la désactivation desdits moyens de réglage de valeur de paramètre quand ladite temporisation s'arrête.

10. Dispositif selon la revendication 7, dans lequel lesdits signaux de coordonnées de contact comprennent des premier et second signaux de coordonnées et lesdits moyens de réglage de valeur de paramètre comprennent des moyens pour régler la valeur dudit paramètre en fonction de modifications dudit premier signal de coordonnées seulement.
